# EUROPÄISCHE PATENTSCHRIFT

(11) **EP 0 576 848 B1**
(45) Veröffentlichungstag und Bekanntmachung des Hinweises auf die Patenterteilung: **30.08.1995**
(21) Anmeldenummer: 93108832.2
(22) Anmeldetag: 02.06.1993
(51) Int. Cl.: C09D 11/00, B41M 1/30

(54) **Bedruckte Formkörper und Folien enthaltend Gelatine sowie Verfahren und Mittel zum Bedrucken**
Printed articles and films containing gelatine, process and means for printing
Articles et feuilles imprimés contenant de la gélatine, procédé et moyen pour imprimer

(30) Priorität: 03.07.1992 DE 4221868
(43) Veröffentlichungstag der Anmeldung: 05.01.1994
(73) Patentinhaber: R.P. Scherer GmbH, D-69412 Eberbach (DE)
(72) Erfinder: Brox, Werner, W-6124 Beerfelden (DE); Block, Peter, W-6930 Eberbach (DE); Schäfer, Reiner, W-6901 Heiligkreuzsteinach (DE)
(74) Vertreter: Werner, Hans-Karsten, Dr.Dipl.-Chem.

(56) Entgegenhaltungen:
- EP-A- 0 254 988
- DE-A- 3 818 071
- GB-A- 1 467 548

## Beschreibung

Gegenstand der vorliegenden Erfindung sind Formkörper und Folien, die insgesamt aus Gelatine bestehen oder zumindest deren äußere Schicht zumindest zu 5% aus Gelatine oder chemisch modifizierter Gelatine besteht, insbesondere Hart- und Weichgelatinekapseln und Blattgelatine, welche im Inkjet-Verfahren bedruckt sind sowie Verfahren zum Bedrucken dieser Formkörper oder Folien und Tinten zur Durchführung des Verfahrens.

Formkörper, die insgesamt aus Gelatine bestehen oder zumindest deren äußere Schicht ganz oder teilweise aus Gelatine besteht, insbesondere Hart- und Weichgelatinekapseln, werden in zunehmendem Maße nach der Herstellung bedruckt. Dies dient vor allem der Kennzeichnung, Identifizierung und Codierung sowie zum Nachweis der Originalität. Als Druckverfahren kommen prinzipiell Prägedruck, Tiefdruck, Siebdruck, Laserdruck und, insbesondere bei Gelatinekapseln, in zunehmendem Maße die Inkjet-Bedruckung in Frage. Dies beruht darauf, daß die anderen Drucktechniken mechanische und thermische Belastungen erforderlich machen, welche zu Beschädigungen der fertigen Kapseln führen können. Ein weiterer Nachteil sind Farbflecken und Streifen, die durch Berühren der frisch bedruckten Kapseln nach der Druckstation entstehen können. Das Inkjet-Verfahren wird insbesondere bei Gelatinekapseln bevorzugt, weil es eine berührungslose und somit produktschonende Bedruckung ermöglicht. Druckwalzen und Gummirollen sind nicht mehr erforderlich. Das Inkjet-Verfahren ermöglicht, auch runde Formkörper wie beispielsweise mit Badeölen befüllte Gelatinekapseln mit größerem Druck zu versehen, obwohl die Oberflächen stark gekrümmt sind.

Die bei der Inkjet-Bedruckung von Hart- und Weichgelatinekapseln bisher verwendeten und auch im Handel erhältlichen Inkjet-Tinten bestehen überwiegend aus Wasser. Sie enthalten ferner weitere Lösungsmittel wie beispielsweise Ethanol, Isopropanol und Propylenglycol sowie viskositätserhöhende Polymere wie beispielsweise Cellulosederivate. Als Farbstoffe werden meist gut wasserlösliche organische Farbstoffe eingesetzt.

Aus dem Derwent-Kurzreferat 86-090677/14 der JP 61-035-989-A ist ein Inkjet-Verfahren bekannt, bei dem das die Tinte haltende Material wie Gelatine, Casein, Stärke, Gummi arabicum, Natriumalginat, Polyacrylamid, PVP, Polyurethan, CMC oder Polyester überzogen ist mit einer die Tinte durchlassenden Schicht eines etwas weniger hydrophilen Materials wie Polyvinylacetat, Polyethylen oder PVC. Dieses Verfahren ist jedoch für das Bedrucken von Gelatinekapseln völlig ungeeignet.

Aus der DE-A-34 11 136 sind thixotrope Tiefdruckfarben mit einem Harz-Bindemittel, Pigment und einem Lösungsmittelsystem bekannt, wobei das Fließverhalten modifiziert wird beispielsweise durch Aluminiumsalze von Alkancarbonsäuren, meist im Gemisch mit Fettsäuren und anderen Bestandteilen. Derartige Farben sind für das Inkjet-Verfahren völlig ungeeignet.

Ein Nachteil des Inkjet-Verfahrens besteht darin, daß insbesondere Gelatinekapseln mit einer Kapselfüllung enthaltend flüssige hydrophile Bestandteile wie Wasser, Ethanol, Propylenglycol oder Polyethylenglycole dazu neigen, bei der Lagerung einen Teil der Inkjet-Tinte an anliegende andere Kapseln abzugeben, so daß sogenannte "Geisterbilder" bzw. Farbflecke und Teile der Schrift im Spiegelbild erscheinen. Ähnliche Erscheinungen können auch bei Gelatinefolien beobachtet werden. Unter Gelatinefolie ist insbesondere die sogenannte "Blattgelatine" zu verstehen, die als Lebensmittel eingesetzt wird. Durch das enge Aneinanderliegen der bedruckten Folien in der Verpackung wird das Auftreten der sogenannten "Geisterbilder" begünstigt.

Die Erfindung hat sich somit die Aufgabe gestellt, die Inkjet-Bedruckung dahingehend zu verbessern, daß diese Störungen vermieden und die im Inkjet-Verfahren aufgetragene Tinte dauerhaft und fest an den Stellen verbleibt, auf die sie aufgetragen wurde, so daß sie nicht ungewollt auf andere mit ihr in Berührung stehende Kapseln oder Folien übertragen werden kann.

Es wurde jetzt gefunden, daß diese Aufgabe gut und einfach gelöst werden kann dadurch, daß die Tinten eine Aluminiumverbindung und/oder eine Calciumverbindung enthalten. Vorzugsweise enthalten die Tinten eine Aluminiumverbindung. Besonders bevorzugt enthalten die Tinten als Aluminiumverbindungen ein Alkalialuminat. Besonders gute Ergebnisse werden erzielt mit den Farbstoffen Carminsäure (E 120), Brillantblau (E 133), Allura Rot (E 129) sowie Gemischen derselben. Prinzipiell kommen aber auch alle anderen lebensmittelrechtlich zugelassenen Farbstoffe in Frage, die mit Aluminiumionen und Calciumionen reagieren können zu Aluminiumsalzen und Calciumsalzen bzw. den sogenannten Aluminiumlacken und Calciumlacken und die sich von den bedruckten Formkörpern, insbesondere den Kapseln optisch ausreichend abheben. So können auch verwendet werden Tartrazin (E 102), Chinolingelb (E 104), Gelborange S (E 110), Carmoisin (E 122), Amaranth (E 123), Cochenillerot (E 124), Erythrosin (E 127) und Indigotin (E 132). Für die Bedruckung von Formkörpern für kosmetische Zwecke kommen wegen anderer gesetzlicher Vorschriften noch weitere Farbstoffe in Betracht. Einige dieser Farbstoffe eignen sich besonders für Formkörper und Gelatinekapseln, die mit den Kontrastfarben dieser Farbstoffe eingefärbt sind. Die Inkjet-Tinte kann zusätzlich auch Farbpigmente wie Titandioxid enthalten, mit welchem auf dunkel eingefärbten Kapseln helle Schriftzeichen oder Markierungen aufgedruckt werden können. Es hat sich gezeigt, daß insbesondere Weichgelatinekapseln enthaltend Lösungsmittel wie Wasser, Ethanol, Propylenglycol, Glycerin und Polyethylenglycole dazu neigen, später einen Teil der aufgedruckten Farbe an andere Kapseln abzugeben. Mit den erfindungsgemäßen Farben, die eine Aluminiumverbindung und/oder eine Calciumverbindung enthalten, wird diese Störung nicht mehr oder nur sehr viel schwächer beobachtet. Die Aluminiumverbindung ist vorzugsweise ein Alkalialuminat, wobei prinzipiell Natrium- und Kaliumaluminat in Frage kommen.

Die oben genannten Farbstoffe Carminsäure (E 120), Brilliantblau (E 133) etc. sind auch als Aluminiumverlackungen im Handel erhältlich. Es ist prinzipiell im Sinne der Erfindung möglich, diese Farblacke in Laugen, z.B. Natronlauge und Kalilauge oder Ammoniak aufzulösen und anschließend mit weiteren Lösungsmitteln und/oder Dispergierungsmitteln zu versetzen. Die so hergestellten Inkjet-Tinten ergeben nach der Bedruckung von Hart- und Weichgelatinekapseln oder Blattgelatine auch keine Geisterbilder. Da der Farbstoffgehalt der handelsüblichen Aluminium-Farbstoffverlackungen im allgemeinen nicht sehr hoch ist, wird als Ausgangsmaterial für die Herstellung der Inkjet-Tinte der reine Farbstoff bevorzugt.

Die vorzugsweise nach dem Inkjet-Verfahren bedruckten Hart- und Weichgelatinekapseln enthalten 5 bis 100% Gelatine, vorzugsweise 20 bis 100% Gelatine. Neben der natürlich vorkommenden Gelatine werden zum Erreichen bestimmter Eigenschaften oft auch chemisch modifizierte Gelatine, beispielsweise succinylierte Gelatine eingesetzt. Außer Buchstaben und Zahlen können erfindungsgemäß auch Firmenembleme oder Dekorationen im Inkjet-Verfahren gedruckt werden.

Bevorzugte erfindungsgemäße Formkörper, insbesondere Weichgelatinekapseln, die im Inkjet-Verfahren bedruckt wurden, werden in den nachfolgenden Beispielen näher erläutert.

### Beispiel 1

14,5 g Aluminiumchlorid-Hexahydrat werden in 250 g Wasser gelöst und mit 29 g einer 25%-igen Natronlauge versetzt. Der pH-Wert der Lösung liegt bei ca. 8. Der Niederschlag aus Aluminiumhydroxid wird abzentrifugiert und mit Wasser gewaschen und dann mit 2%-iger Natronlauge wieder aufgelöst. 25 g Carminsäure (E 120) werden unter Rühren in die frisch bereitete Natriumaluminatlösung gegeben und darin aufgelöst. Nach dem Abfiltrieren wird mit 25%-iger Natriumhydroxidlösung auf einen pH-Wert von ca. 10,5 eingestellt. Dieser Lösung werden 11,0 g Hydroxypropylmethylcellulose, gelöst in 245 g Wasser, zugesetzt. Weiterhin werden 67 g Propylenglycol und 150 g Isopropylalkohol zugetropft und eingerührt. Es entsteht so ein kg einer Inkjet-Tinte, die sich hervorragend verarbeiten läßt und keine "Geisterbilder" mehr gibt.

### Beispiel 2

In analoger Weise wie in Beispiel 1 beschrieben wird eine Tinte hergestellt unter Verwendung von Brillantblau (E 133). Die mit dieser Tinte bedruckten Gelatinekapseln und Gelatinefolien zeigen ebenfalls keine störenden "Geisterbilder".

### Beispiel 3

33,3 g Brillantblau (E 133) wird in 200 g Wasser gelöst und die Lösung durch einen Kationenaustauscher gegeben, um aus dem Dinatriumsalz des Farbstoffs die Farbstoffsäure herzustellen. Der Ionenaustauscher wird mit 340,7 g Wasser nachgespült. Der pH-Wert der so erhaltenen Farbstofflösung beträgt ca. 1,2. 14,0 g Calciumchlorid und 4,0 g Calciumcarbonat werden darin gelöst, wobei der pH-Wert auf ca. 6,0 ansteigt. Dieser Lösung werden 11,0 g Hydroxypropylmethylcellulose, gelöst in 150 g Wasser, zugesetzt. Weiterhin werden 67 g Propylenglykol und 180 g Isopropanol zugetropft und eingerührt. Es entsteht so 1 kg einer Inkjet-Tinte, die sich hervorragend verarbeiten läßt und nur sehr vereinzelt schwache "Geisterbilder" gibt.

### Vergleichsbeispiel

Eine Tinte gleicher Zusammensetzung enthaltend Brilliantblau (E 133) als Farbstoff, jedoch ohne Zusatz von Alkalialuminat, gibt ebenfalls gute Druckergebnisse, jedoch werden in erheblichem Maße "Geisterbilder" beobachtet. Das gleiche gilt für eine Tinte gemäß Beispiel 3, welche jedoch das Dinatriumsalz der Farbstoffsäure enthält.

## Patentansprüche

1. Formkörper und Folien, die insgesamt oder zumindest deren äußere Schicht aus mindestens 5% Gelatine oder chemisch modifizierter Gelatine bestehen und welche im Inkjet-Verfahren bedruckt sind, dadurch gekennzeichnet, daß die eingetrockneten Inkjet-Tinten neben gegebenenfalls nicht flüchtigen Anteilen von Lösungsvermittlern und/oder Dispergierungsmitteln eine Aluminium- und/oder Calcium-Farbstoffverbindung enthalten.

2. Formkörper gemäß Anspruch 1, dadurch gekennzeichnet, daß die Formkörper Hart- oder Weichgelatinekapseln sind.

3. Formkörper gemäß Anspruch 1 oder 2, dadurch gekennzeichnet, daß die Formkörper Weichgelatinekapseln sind mit einer Kapselfüllung, enthaltend flüssige hydrophile Bestandteile.

4. Formkörper gemäß Anspruch 3, dadurch gekennzeichnet, daß die Kapselfüllung mindestens 5% Wasser, Ethanol, Propylenglycol, Glycerin oder Polyethylenglycole enthält.

5. Formkörper gemäß einem der Ansprüche 1 bis 4, dadurch gekennzeichnet, daß als Farbstoff Carminsäure (E 120), Brillantblau (E 133), Allura Rot (E 129) oder Gemische derselben verwendet werden.

6. Verfahren zum Bedrucken von Formkörpern oder Folien, die insgesamt oder zumindest deren äußere Schicht aus mindestens 5% Gelatine oder chemisch modifizierter Gelatine bestehen, insbesondere Hart- und Weichgelatinekapseln im Inkjet-Verfahren mit Tinten, welche eine wäßrige Lösung von Farbstoffen, gegebenenfalls Lösungsvermittlern und/oder Dispergierungsmitteln enthalten, dadurch gekennzeichnet, daß die Tinten eine Aluminium- und/oder Calciumverbindung enthalten.

7. Verfahren gemäß Anspruch 6, dadurch gekennzeichnet, daß die Aluminiumverbindungen enthaltenden Tinten alkalisch eingestellt sind.

8. Verfahren gemäß Anspruch 6 oder 7, dadurch gekennzeichnet, daß die Formkörper Weichgelatinekapseln sind mit einer Kapselfüllung enthaltend flüssige hydrophile Bestandteile.

9. Verfahren gemäß einem der Ansprüche 6 bis 8, dadurch gekennzeichnet, daß als Farbstoff Carminsäure (E 120), Brillantblau (E 133), Allura Rot (E 129) oder Gemische derselben verwendet werden.

10. Tinten zur Durchführung des Verfahrens gemäß Ansprüchen 6 bis 9, enthaltend eine wäßrige Lösung oder Dispersion von Farbstoffen und/oder Pigmenten, gegebenenfalls Lösungsvermittlern und/oder Dispergierungsmitteln, dadurch gekennzeichnet, daß sie eine Aluminium- und/oder Calciumverbindung enthalten.

11. Tinten gemäß Anspruch 10, dadurch gekennzeichnet, daß die Aluminiumverbindungen enthaltenden Tinten alkalisch eingestellt sind.

## Claims

1. Shaped bodies and sheets which altogether consist of gelatin or at least the outer layer of which consists of at least 5% of gelatin or of a chemically modified gelatin, and which have been printed using the ink jet process, characterized in that the dried-up ink jet inks contain an aluminum and/or calcium dye compound in addition to optionally non-volatile proportions of solubilizers and/or dispersants.

2. The shaped bodies according to claim 1, characterized in that the shaped bodies are hard or soft gelatin capsules.

3. The shaped bodies according to claim 1 or 2, characterized in that the shaped bodies are soft gelatin capsules having a capsule filling containing liquid hydrophilic components.

4. The shaped bodies according to claim 3, characterized in that the capsule filling contains at least 5% of water, ethanol, propylene glycol, glycerol or poly(ethylene glycols).

5. The shaped bodies according to any of claims 1 to 4, characterized in that Carminic Acid (E 120), Brilliant Blue (E 133), Allura Red (E 129) or mixtures thereof are used as the dye.

6. A process for printing shaped bodies or sheets which altogether consist of gelatin or at least the outer layer of which consists of at least 5% of gelatin or of chemically modified gelatin, and especially hard and soft gelatin capsules, by means of the ink jet process using inks containing an aqueous solution of dyes, optionally of solubilizers and/or dispersants, characterized in that the inks contain an aluminum and/or calcium compound.

7. The process according to claim 6, characterized in that the inks containing aluminum compounds are adjusted to an alkaline condition.

8. The process according to claim 6 or 7, characterized in that the shaped bodies are soft gelatin capsules having a capsule filling containing liquid hydrophilic components.

9. The process according to any of claims 6 to 8, characterized in that Carminic Acid (E 120), Brilliant Blue (E 133), Allura Red (E 129) or mixtures thereof are used as the dye.

10. Inks for performing the process according to claims 6 to 9, containing an aqueous solution or dispersion of dyes and/or pigments, optionally of solubilizers and/or dispersants, characterized in that they contain an aluminum and/or calcium compound.

11. Inks according to claim 10, characterized in that the inks containing aluminum compounds are adjusted to an alkaline condition.

## Revendications

1. Articles moulés et feuilles, dont l'ensemble ou au moins la couche extérieure est constitué d'au moins 5 % de gélatine ou d'une gélatine modifiée chimiquement, et qui sont imprimés au moyen d'un procédé d'impression par jet d'encre, caractérisés en ce que les encres appliquées par jet d'encre qui sont séchées sur eux, contiennent un composé colorant à base d'aluminium et/ou de calcium, en plus de quantités éventuellement non volatiles d'agents de solubilisation et/ou d'agents de dispersion.

2. Articles moulés selon la revendication 1, caractérisés en ce qu'ils forment des capsules de gélatine dure ou des capsules de gélatine molle.

3. Articles moulés selon la revendication 1 ou 2, caractérisés en ce qu'ils forment des capsules de gélatine molle avec une matière de remplissage contenant des constituants liquides hydrophiles.

4. Articles moulés selon la revendication 3, caractérisés en ce que la matière de remplissage des capsules contient au moins 5 % d'eau, d'éthanol, de propylèneglycol, de glycérol ou de polyéthylèneglycols.

5. Articles moulés selon l'une des revendications 1 à 4, caractérisés en ce qu'on utilise, comme colorant, l'acide carminique (E 120), le bleu brillant (E 133), le rouge "Allura" (E 129) ou des mélanges de ceux-ci.

6. Procédé d'impression d'articles moulés ou de feuilles dont l'ensemble ou au moins la couche extérieure est constitué d'au moins 5 % de gélatine ou d'une gélatine modifiée chimiquement, en particulier des capsules de gélatine dure et des capsules de gélatine molle, au moyen d'un procédé d'impression par jet d'encre avec des encres qui contiennent une solution aqueuse de colorants, éventuellement d'agents de solubilisation et/ou d'agents de dispersion, caractérisé en ce que les encres contiennent un composé de l'aluminium et/ou un composé du calcium.

7. Procédé selon la revendication 6, caractérisé en ce que les encres contenant des composés de l'aluminium sont alcalinisées.

8. Procédé selon la revendication 6 ou 7, caractérisé en ce que les articles moulés sont des capsules de gélatine molle avec une matière de remplissage contenant des constituants liquides hydrophiles.

9. Procédé selon l'une des revendications 6 à 8, caractérisé en ce qu'on utilise, comme colorant, l'acide carminique (E 120), le bleu brillant (E 133), le rouge "Allura" (E 129) ou des mélanges de ceux-ci.

10. Encres pour la mise en oeuvre du procédé selon les revendications 6 à 9, contenant une solution aqueuse ou une dispersion aqueuse de colorants et/ou de pigments, éventuellement d'agents de solubilisation et/ou d'agents de dispersion, caractérisées en ce qu'elles contiennent un composé de l'aluminium et/ou un composé du calcium.

11. Encres selon la revendication 10, caractérisées en ce que les encres contenant des composés de l'aluminium sont alcalinisées.
